# EUROPÄISCHE PATENTSCHRIFT

(11) **EP 0 902 991 B1**
(45) Veröffentlichungstag und Bekanntmachung des Hinweises auf die Patenterteilung: **13.09.2000**
(21) Anmeldenummer: 97927116.0
(22) Anmeldetag: 03.06.1997
(51) Int. Cl.: H01R 11/28

(54) **EINRICHTUNG UND VERFAHREN ZUR AUSBILDUNG EINER ELEKTRISCHEN VERBINDUNG**
DEVICE AND PROCESS FOR MAKING AN ELECTRICAL CONNECTION
DISPOSITIF ET PROCEDE POUR REALISER UNE CONNEXION ELECTRIQUE

(30) Priorität: 04.06.1996 DE 19622406
(43) Veröffentlichungstag der Anmeldung: 24.03.1999
(73) Patentinhaber: Emitec Gesellschaft für Emissionstechnologie mbH, 53797 Lohmar (DE); Bayerische Motoren Werke Aktiengesellschaft, 80809 München (DE)
(72) Erfinder: BRÜCK, Rolf, D-51429 Bergisch Gladbach (DE); HIRTH, Peter, D-51107 Köln (DE); BERGAU, Norbert, D-53804 Much (DE); ALBIEZ, Robert, D-85084 Reichertshofen (DE); GRÖBMAIR, Maximilian, D-83623 Dietramszell (DE); OTTO, Erhard, D-85368 Moosburg (DE)
(74) Vertreter: Kahlhöfer, Hermann, Dipl.-Phys.
(86) Internationale Anmeldenummer: EP9702873
(87) Internationale Veröffentlichungsnummer: WO9747057

(56) Entgegenhaltungen:
- DE-A- 2 104 036
- FR-A- 740 843
- GB-A- 449 934
- US-A- 3 457 542
- US-A- 5 436 216

## Beschreibung

Der Gegenstand der Erfindung bezieht sich auf einem elektrisch beheizbaren Wabenkörper und ein Verfahren zur Ausbildung einer elektrischen Verbindung dieses Wabenkörpers gemäß den Merkmalen der Ansprüche 1 und 14.

Zum Verbinden zweier elektrischer Leitungen sind unterschiedliche Möglichkeiten bekannt. So können beispielsweise zwei elektrische Leitungen durch Löten miteinander verbunden werden. Lösbare Verbindungen zweier elektrischer Leitungen werden dadurch erreicht, daß die jeweilige Leitung mit jeweils einem Kontaktstück verbunden wird und die Kontaktstücke ihrerseits verbunden werden. Hierzu sind beispielsweise Kontaktstücke bekannt, die ineinander geschoben werden. Bei einer solchen Einrichtung zur Ausbildung einer elektrischen Verbindung ist das eine Kontaktstück zungenförmig ausgebildet. Dieses Kontaktstück wird in eine in einem zweiten Kontaktstück korrespondierend ausgebildete Ausnehmung eingeschoben. Solche elektrische Verbindungen werden vornehmlich für elektrische Leitungen verwendet, durch die nur geringe Ströme fließen.

Die GB-A-449 934 zeigt eine Einrichtung zur Ausbildung einer elektrischen Verbindung. Bei dieser elektrischen Verbindung sind zwei Kontaktstücke vorgesehen, die eine lösbare Kegelpreßverbindung bilden. Das erste Kontaktstück weist an einem Endbereich einen kegelförmigen Abschnitt auf, der in einen Gewindeabschnitt übergeht. Das zweite Kontaktstück hat eine kegelförmige Ausnehmung, die in eine Durchgangsöffnung übergeht. Das erste Kontaktstück ist in das zweite Kontaktstück einbringbar. Die Ausbildung der lösbaren Kegelpreßverbindung erfolgt mittels einer Mutter, die auf den Gewindeabschnitt des ersten Kontaktstückes aufschraubbar ist und die zur Anlage an eine Stirnfläche des zweiten Kontaktstückes kommt. Durch diese Ausgestaltung einer Einrichtung zur Ausbildung einer elektrischen Verbindung wird sichergestellt, daß die Kegelpreßverbindung sich nicht löst, wenn die Kontaktstücke aufgrund ihrer Werkstoffeigenschaften ein unterschiedliches Wärmeausdehnungsverhalten aufweisen.

Im Automobilbereich werden unterschiedliche Einrichtungen zur Ausbildung einer elektrischen Verbindung verwendet. So sind beispielsweise zur Ankopplung der Masse einer Batterie eines Kraftfahrzeuges an die Karosserie Massebolzen bekannt, die mit der Karosserie verschweißt werden. Der Massebolzen weist einen Gewindeabschnitt auf, durch den ein Kontaktstück, z. B. ein Kabelschuh, welches mit einem Massekabel verbunden ist, am Bolzen festgeschraubt wird. Bei der Anbindung eines Massekabels an die Karosserie ist an und für sich eine nicht lösbare Verbindung erwünscht.

Eine Einrichtung zur Ausbildung einer lösbaren elektrischen Verbindung beschreibt die FR-A-740.843. Es handelt sich hierbei um eine Einrichtung durch die ein elektrisches Kabel mit einem Anschlußpol einer Batterie verbindbar ist. Der Anschlußpol der Batterie ist kegelstumpfförmig ausgebildet. In den Anschlußpol erstreckt sich von der freien Stirnseite her eine sich verjüngende Gewindebohrung. In diese Gewindebohrung ist eine kegelförmige Schraube einschraubbar. Der Anschlußpol der Batterie ist in einer Längsebene geteilt, so daß dieser spreizbar ist. Ein mit einem Kabel verbundenes Kontaktstück ist buchsenförmig ausgebildet. Es weist eine zu dem Anschlußpol der Batterie korrespondierend ausgebildete Aufnahme auf. Ist das Kontaktstück auf dem Anschlußpol angebracht, so wird durch Einschrauben der Schraube der Anschlußpol gespreizt, wodurch zwischen dem Anschlußpol und dem Kontaktstück eine Preßverbindung entsteht, die lösbar ist. Der Vorzug dieser Ausgestaltung der Einrichtung besteht im wesentlichen darin, daß das Kontaktstück nach Entfernen der Schraube leicht vom Anschlußpol abnehmbar ist.

Eine weitere Verbindungsmöglichkeit eines Kabels mit einem Anschlußpol einer Batterie ist durch die DE-OS 21 04 036 bekannt. Diese Einrichtung umfaßt eine Anschlußpfanne mit einem kegelstumpfförmigen Abschnitt. Der kegelstumpfförmige Abschnitt ist so geschlitzt, daß die Mantelabschnitte elastisch sind. Der kegelförmige Abschnitt weist ein Außengewinde für eine Überwurfmutter auf. Zur Kontaktierung der Anschlußpfanne mit einem Batteriepol wird die Anschlußpfanne auf dem Batteriepol angeordnet und die Überwurfmutter auf das Außengewinde aufgeschraubt. Durch die Überwurfmutter werden die elastischen Abschnitte gegen die Mantelfläche des Batteriepols gepreßt. Zur Verbesserung des elektrischen Kontaktes zwischen der Anschlußpfanne und dem Batteriepol sind an der Innenfläche des kegelförmigen Schaftes Vorsprünge vorgesehen, die die Oberfläche des Anschlußpols einritzen.

Besonderen Anforderungen unterliegt eine elektrische Verbindung, durch die ein elektrisch beheizbarer Wabenkörper, insbesondere eines katalytischen Konverters, mit einer Spannungsquelle verbunden wird. Bei einem solchen katalytischen Konverter kann es sich beispielsweise um ein Bauteil eines Abgassystems einer Verbrennungskraftmaschine handeln. Der Einsatz solcher katalytischer Konverter nimmt an Bedeutung zu, da durch gesetzliche Bestimmungen die Schadstoffemission von Kraftfahrzeugen verringert werden soll. Mit den steigenden Anforderungen an eine Verringerung der Schadstoffe in Abgasen aus Kraftfahrzeugen werden zunehmend komplexere Abgasreinigungssysteme für Verbrennungskraftmaschinen eingesetzt. Insbesondere zur Verringerung des Schadstoffausstoßes während der Kaltstartphase eines Verbrennungsmotors werden neben geregelten Drei-Wege-Katalysatoren elektrisch beheizbare katalytische Konverter eingesetzt. Eine solche Anordnung ist beispielsweise durch die WO 92/02714 bekannt. Problematisch bei solchen elektrisch beheizbaren katalytischen Konvertern ist die Ausbildung der elektrischen Verbindung der Anschlüsse des katalytischen Konverters an die Stromleitungen. Während des Aufheizvorgangs eines katalytischen Konverters sind Stromstärken von bis zum 500 Ampere zu übertragen. Aufgrund der relativen Nähe der Stromzuführleitungen zur Katalysatoroberfläche sind die Stromzuführleitungen bzw. die Verbindungsstellen enormen Temperaturschwankungen ausgesetzt. In der Nähe des katalytischen Konverters können Temperaturen bis zu 350 °C an der Verbindungsstelle entstehen.

Bei den bisher bekannten katalytischen Konvertern ist ein Kabelschuh einer elektrischen Leitung durch eine Verschraubung auf einem Anschluß des katalytischen Konverters festgelegt worden.

Der vorliegenden Erfindung liegt die Aufgabe zugrunde, eine gattungsgemäße Einrichtung zur Ausbildung einer elektrischen Verbindung, insbesondere bei einem elektrisch beheizbaren Wabenkörper, derart weiterzubilden, daß geringem technischen Aufwand eine zuverlässige elektrische Verbindung erzielt werden kann. Ein weiteres Ziel ist es, durch die Einrichtung eine auch unter wechselnden Temperaturen haltbare elektrische Verbindung zu schaffen. Ein weiteres Ziel der Erfindung ist es, ein Verfahren zur Ausbildung einer elektrischen Verbindung anzugeben, welches insbesondere bei Großserienproduktionen leicht durchführbar und in einen Gesamtherstellungsprozeß integrierbar ist. Insbesondere soll das Verfahren zur Ausbildung einer elektrischen Verbindung automatisierbar sein.

Diese Aufgabe wird erfindungsgemäß durch eine Einrichtung zur Ausbildung einer elektrischen Verbindung mit den Merkmalen des Anspruchs 1 sowie durch ein Verfahren zur Ausbildung einer elektrischen Verbindung mit den Merkmalen des Anspruchs 14 gelöst. Vorteilhafte Weiterbildungen sind Gegenstand der Unteransprüche.

Die erfindungsgemäße Einrichtung zur Ausbildung einer elektrischen Verbindung weist ein erstes und ein zweites Kontaktstück auf, wobei das erste Kontaktstück einen Außenkonus und das zweite Kontaktstück einen Innenkonus hat. Die Mantelfläche des Außenkonuses und die Mantelfläche des Innenkonuses der Kontaktstücke sind unter einem solchen Neigungswinkel ausgebildet, daß das erste Kontaktstück und das zweite Kontaktstück eine selbsthemmende Konusverbindung bilden. Durch diese Ausgestaltung der Einrichtung zur Ausbildung einer elektrischen Verbindung wird mit einfachen Mitteln eine sichere und zuverlässige elektrische Verbindung geschaffen. Der Vorzug der Einrichtung ist auch darin zu sehen, daß für eine haltbare und dauerhafte Verbindung zwischen dem ersten und dem zweiten Kontaktstück nicht zwingend zusätzliche Sicherungsmittel notwendig sind, da die Konusverbindung selbsthemmend ist. Eine solche Verbindung ist haltbar.

Zur Ausbildung der selbsthemmenden Konusverbindung wird vorgeschlagen, daß der Neigungswinkel der Mantelflächen in Abhängigkeit von einer Werkstoffpaarung und/oder einem Oberflächenzustand des ersten und des zweiten Kontaktstückes bestimmt wird. Durch den Neigungswinkel kann der Grad der Selbsthemmung stark variiert werden.

Vorzugsweise weist das erste Kontaktstück einen Außenkonus und einen in der Nähe des Außenkonuses ausgebildeten Gewindeabschnitt auf. Das zweite Kontaktstück weist einen Innenkonus auf. Die Einrichtung umfaßt ferner ein Element, das mit dem ersten Kontaktstück verschraubbar ist. Durch das Element werden die Kontaktstücke relativ zueinander verschoben, so daß zwischen den Kontaktstücken eine Konusverbindung entsteht. Das Element ist vorzugsweise ein Montageelement, durch welches insbesondere eine automatische Ausbildung der Konusverbindung erzeugt werden kann. Alternativ kann das Element ein Befestigungselement sein, durch welches eine zusätzliche Sicherung der Konusverbindung erreicht wird.

Nach einer weiteren vorteilhaften Ausgestaltung der Einrichtung wird vorgeschlagen, daß der Gewindeabschnitt ein Gewindezapfen ist, wobei der Außendurchmesser des Gewindezapfens höchstens dem kleinsten Durchmesser des Innenkonuses entspricht. Alternativ hierzu kann das erste Kontaktstück eine sich in Richtung des Außenkonuses erstreckende Gewindebohrung aufweisen. Durch Aufschrauben eines Elementes auf den Gewindezapfen bzw. durch Einschrauben des Elementes in die Gewindebohrung kann eine Relativbewegung zwischen dem ersten und dem zweiten Kontaktstück erreicht werden. Durch das Anzugsmoment des Elementes kann die Anpreßkraft zwischen den beiden Kontaktstücken bestimmt werden.

Wird das Element in die Gewindebohrung eingeschraubt, so handelt es sich vorzugsweise um ein Element, welches wenigstens eine zur Anlage an das erste Kontaktstück bringbare Schulter aufweist. Bei einem solchen Element kann es sich um eine Schraube handeln, die mit ihrem Kopf oder gegebenenfalls mit einer Zwischenlage zur Anlage an das erste Kontaktstück geschoben wird.

Nach einem weiteren Vorschlag ist der Gewindeabschnitt in Form eines Außengewindes ausgebildet, wobei der Gewindedurchmesser des Außengewindes wenigstens dem größten Durchmesser des Außenkonuses entspricht. Das Element weist eine das zweite Kontaktstück wenigstens teilweise aufnehmende Ausnehmung und wenigstens einen im wesentlichen quer zur axialen Richtung des zweiten Kontaktstückes verlaufenden Anschlag auf, der am zweiten Kontaktstück angreift.

Bei einer solchen Ausbildung der Einrichtung zur Ausbildung einer elektrischen Verbindung wird durch das Element die Konusverbindung geschützt, da das Element die Verbindung gegenüber äußeren Umwelteinflüssen zumindest teilweise abkapselt.

Besonders vorteilhaft ist eine Einrichtung zur Ausbildung einer elektrischen Verbindung, die ein erstes Kontaktstück aufweist, das durch eine geschlitzte Buchse gebildet ist. Auf die Buchse ist ein Element aufschraubbar, durch das ein zweites Kontaktstück, das einen Innenkonus aufweist, auf den Außenkonus der Buchse gepreßt wird.

Bevorzugt ist eine Einrichtung zur Ausbildung einer elektrischen Verbindung, bei der eines der Kontaktstücke, vorzugsweise das erste Kontaktstück, wenigstens teilweise durch einen aus einem Mantel eines elektrisch beheizbaren Wabenkörpers, vorzugsweise eines katalytischen Konverters, ragenden Zentralleiter gebildet ist. Durch eine solche Einrichtung wird eine Stromzuführung zu einem katalytisch wirkenden Konverter gewährleistet.

Vorzugsweise ist der Neigungswinkel der Mantelfläche des Außen- bzw. Innenkonuses zwischen 1° und 5°, insbesondere bei 1,75°. Aufgrund eines solchen Neigungswinkels kann mit einem geringen Anzugsdrehmoment eine große Kontaktkraft zwischen dem ersten und dem zweiten Kontaktstück erzeugt werden. Der Neigungswinkel in dem angegebenen Bereich ist besonders vorteilhaft, da in diesem Bereich, insbesondere bei 1,75°, die Konusverbindung selbsthemmend ist. Die Kontaktstücke bestehen vorzugsweise aus Edelstahl. Vorzugsweise hat der Außenkonus die Form eines Außenkegels und der Innenkonus die Form eines Innenkegels. Der Außenkegel und der Innenkegel bilden eine selbsthemmende Kegelpreßverbindung aus.

Nach einem anderen erfindungsgemäßen Gedanken wird ein Verfahren zur Ausbildung einer elektrischen Verbindung vorgeschlagen, bei dem zunächst auf einem Abschnitt eines Außenkonuses eines ersten Kontaktstückes ein zweites Kontaktstück mit einem Innenkonus angeordnet wird. Danach wird ein Element mit einem Gewindeabschnitt, der in der Nähe des Außenkonuses des ersten Kontaktstückes ausgebildet ist, aufgeschraubt, wodurch das zweite Kontaktstück auf das erste Kontaktstück zur Ausbildung einer Konusverbindung geschoben wird. Soll das Element als eine zusätzliche Sicherung der selbsthemmenden Konusverbindung genutzt werden, so verbleibt das Element in seinem aufgeschraubten Endzustand. Das Element kann auch nachdem die selbsthemmende Konusverbindung ausgebildet wurde, entfernt werden und für die Ausbildung weiterer Konusverbindungen verwendet werden. Durch die selbsthemmende Ausgestaltung der Konusverbindung wird der Herstellungsvorgang vereinfacht.

Weitere Vorteile und Merkmale der Erfindung werden anhand der in der Zeichnung dargestellten Ausführungsbeispiele erläutert. Es zeigen:
- Fig. 1: schematisch ein erstes Ausführungsbeispiel im Querschnitt,
- Fig. 2: im Querschnitt ein zweites Ausführungsbeispiel einer Einrichtung,
- Fig. 3: im Querschnitt ein drittes Ausführungsbeispiel mit einem kappenartigen Befestigungselement und
- Fig. 4: ein viertes Ausführungsbeispiel im Querschnitt mit einer Kontaktbuchse.

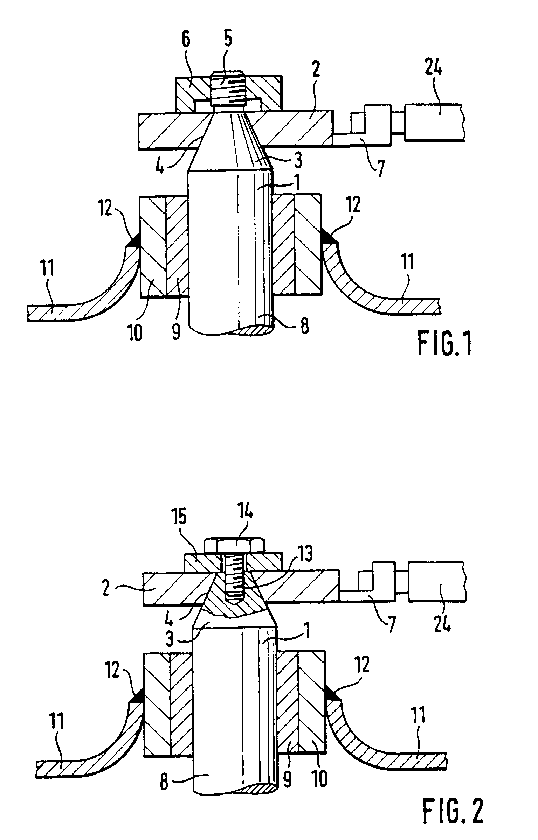

Die in den Fig. 1 bis 4 dargestellten Ausführungsbeispiele einer Einrichtung zur Ausbildung einer elektrischen Verbindung werden anhand der Ankopplung eines elektrischen Leiters 24 an einen elektrisch beheizbaren katalytischen Konverter erläutert. Der Aufbau eines solchen katalytischen Konverters ist beispielsweise in der WO 92/02714 beschrieben.

In der Fig. 1 ist ein erstes Ausführungsbeispiel einer Einrichtung zur Ausbildung einer elektrischen Verbindung dargestellt. In einem Mantel 11 ist eine Durchgangsöffnung ausgebildet, durch die sich eine metallische Hülse 10 erstreckt. Die Hülse 10 ist mit dem Mantel 11 verschweißt. Die Schdeißnaht zwischen der Hülse 10 und dem metallischen Mantel 11 ist mit 12 bezeichnet. Durch die Hülse 10 erstreckt sich ein Zentralleiter 8. Das in den Mantel 11 hineinragende Ende des Zentralleiters 8 steht im elektrischen Kontakt mit einem nicht dargestellten katalytischen Konverter. Das aus der Hülse 10 vom Mantel 11 wegragende Ende des Zentralleiters 8 dient zur elektrischen Ankopplung an einen elektrischen Leiter 24, der mit einer nicht dargestellten Spannungsquelle verbunden ist.

Zwischen dem Zentralleiter 8 und der Hülse 10 ist eine elektrische Isolierung 9 angebracht, so daß eine elektrische Entkopplung zwischen der Hülse 10 und dem Zentralleiter 8 gewährleistet ist. Bei der Isolierung 9 kann es sich beispielsweise um Aluminiumoxid handeln.

Das aus der Hülse 10 vom Mantel 11 wegragende Ende des Zentralleiters 8 bildet ein erstes Kontaktstück 1. Das erste Kontaktstück 1 weist einen Außenkegel 3 auf. Der Außenkegel 3 verjüngt sich vom Mantel 11 weg. An den Außenkegel 3 schließt sich ein Gewindezapfen 5 an. Auf den Gewindezapfen 5 ist ein Element in Form einer Mutter 6 aufgeschraubt.

Auf dem Außenkegel 3 des Kontaktstücks 1 ist ein zweites Kontaktstück 2 angeordnet. Das zweite Kontaktstück 2 weist einen zum Außenkegel 3 entsprechenden Innenkegel 4 auf. Durch Anziehen der Mutter 6 wird das zweite Kontaktstück mit dem Innenkegel 4 auf den Außenkegel 3 aufgeschoben, wodurch eine Kegelpreßverbindung entsteht.

An dem Kontaktstück 2 ist eine Anschlußfahne 7 ausgebildet, durch die das Kontaktstück 2 mit einer elektrischen Leitung 24 verbunden ist. Bei der Verbindung der Anschlußfahne 7 mit der elektrischen Leitung 24 kann es sich um eine Schraub- und/oder Löt- und/oder Schweißverbindung handeln.

In der Fig. 2 ist ein zweites Ausführungsbeispiel einer Einrichtung zur Ausbildung einer elektrischen Verbindung dargestellt. Auch in diesem Ausführungsbeispiel bildet der aus dem Mantel 11 herausragende Endabschnitt des Zentralleiters 8 ein erstes Kontaktstück, das einen Außenkegel 3 aufweist. Der Außenkegel 3 verjüngt sich zu der aus dem Mantel 11 herausragenden Stirnfläche hin. Von der Stirnfläche des Kontaktstückes 1 erstreckt sich in axialer Richtung des Kontaktstücks 1 bzw. des Zentralleiters 8 eine Gewindebohrung 13. In die Gewindebohrung 13 ist ein Element in Form einer Schraube 14 eingeschraubt. Zwischen dem Kopf der Schraube 14 und dem zweiten Kontaktstück 2 ist ein Distanzstück 15 angeordnet, welches an dem Kontaktstück 2 anliegt. Durch Einschrauben der Schraube 14 in die Gewindebohrung 13 wird eine Kraft in axialer Richtung des Kontaktstücks 1 ausgeübt, wodurch das Kontaktstück 2 mittels des Distanzstückes 15 auf den Außenkegel 3 geschoben wird. Im montierten Zustand liegt die Mantelfläche des Innenkegels 4 des zweiten Kontaktstücks 2 auf der Mantelfläche des Außenkegels 3. Mit dem Kontaktstück 2 ist eine Anschlußfahne 7 verbunden, die zur Befestigung einer elektrischen Leitung 24 an dem Kontaktstück 2 dient.

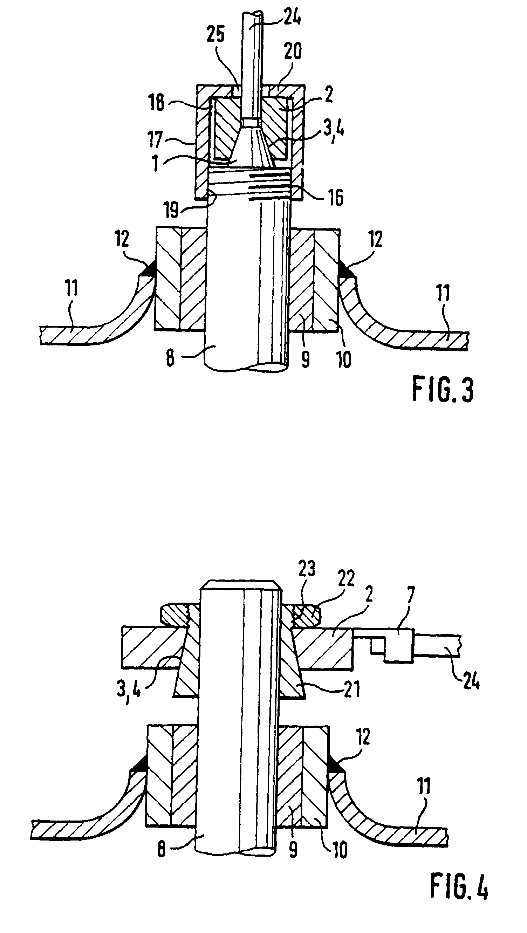

Ein weiteres Ausführungsbeispiel einer Einrichtung zur Ausbildung einer elektrischen Verbindung ist in der Fig. 3 dargestellt. Der prinzipielle Aufbau des Zentralleiters 8 in Verbindung mit einem katalytischen Wabenkörper im Ausführungsbeispiel nach Fig. 3 entspricht der Ausgestaltung nach Fig. 1 bzw. 2.

Der aus dem Mantel 11 herausragende Abschnitt des Zentralleiters 8 bildet ein erstes Kontaktstück 21. Das Kontaktstück weist ein Außengewinde 16 auf, wobei der Gewindedurchmesser des Außendurchmessers 16 wenigstens dem größten Durchmesser des Außenkegels 3 entspricht. Mit dem Außengewinde 16 des Kontaktstücks 1 ist ein Element 17 verbunden. Hierzu weist das Element 17 ein Innengewinde 19 auf. Das Element 17 ist rohrförmig ausgebildet. Es weist eine das zweite Kontaktstück 2 aufnehmende Ausnehmung 18 auf. An dem dem Innengewinde 19 gegenüberliegenden Ende des Elementes 17 ist ein umlaufender Anschlag 20 ausgebildet. Der Anschlag 20 greift an dem zweiten Kontaktstück 2 an. Das zweite Kontaktstück 2 weist einen Innenkegel 4 auf, der, wie in der Fig. 3 dargestellt ist, auf dem Außenkegel 3 des ersten Kontaktstücks 1 aufliegt. Mit dem Kontaktstück 2 ist eine elektrische Leitung 24 verbunden, die sich durch eine durch den Anschlag 20 begrenzte Öffnung 25 hindurch erstreckt. Das Element 17 umgibt die Kegelpreßverbindung zwischen dem ersten 1 und dem zweiten 2 Kontaktstück.

Fig. 4 zeigt einen Mantel 11, durch den sich eine metallische Hülse 10 hindurch erstreckt. Die Hülse 10 ist mit dem Mantel 11 verschweißt. Durch die Hülse 10 erstreckt sich ein stiftförmig ausgebildeter Zentralleiter 8. Das in den Mantel 11 hineinragende Ende des Zentralleiters 8 steht in elektrischem Kontakt mit einem nicht dargestellten katalytischen Konverter. Zwischen dem Zentralleiter 8 und der Hülse 10 ist eine elekrische Isolierung 9 vorgesehen, wodurch eine elektrische Entkopplung zwischen der Hülse 10 und dem Zentralleiter 8 sichergestellt ist. Eine solche Anordnung eines stiftförmigen Zentralleiters 8 ist beispielsweise durch den Artikel von P.F. Küpper, W. Maus et al, veröffentlicht in SAE TECHNICAL PAPER SERIES 940465, der den gattungsgemäßen Stand der Technik bildet, bekannt.

Auf dem aus dem Mantel 11 herausragenden Endabschnitt des stiftförmigen Zentralleiters 8 ist eine geschlitzte Buchse 21 angeordnet. Die Buchse 21 weist einen Außenkegel 3 auf. Die Buchse 21 weist einen zylinderförmigen Abschnitt auf, der ein Außengewinde 23 aufweist. Der Außendurchmesser des Außengewindes 23 entspricht höchstens dem kleinsten Durchmesser des Außenkegels 3 in der Buchse 21. Auf dem Außengewinde 23 ist eine Mutter 22 aufgeschraubt, durch die ein zweites Kontaktstück 2 mit einem Innenkegel 4 auf den Außenkegel 3 der Buchse 21 aufgeschoben wird. Durch das Kontaktstück 2 wird die geschlitzte Buchse 21 zusammengepreßt, wodurch eine elektrische und eine mechanische Verbindung zwischen der Buchse 21 und dem stiftförmigen Zentralleiter 8 entsteht. Eine elektrische und mechanische Verbindung entsteht auch zwischen der Buchse 21 und dem zweiten Kontaktstück 2. Das zweite Kontaktstück 2 ist mit einem elektrischen Leiter 24 verbunden.

Die bevorzugten Ausführungsbeispiele einer Einrichtung zur Ausbildung einer elektrischen Verbindung sind insbesondere zur Schaffung einer elektrischen Verbindung mit einem Zentralleiter eines katalytischen Konverters geeignet. Der elektrische Zentralleiter 8 ist beispielsweise durch Schweißen oder Hartlöten mit einem metallischen Wabenkörper verbunden. Bei der Ausbildung und beim Lösen der Kegelpreßverbindung wird die Verbindungsstelle zwischen dem Zentralleiter 8 und dem metallischen Wabenkörper nicht oder nur in einem geringen Maße beansprucht, da die zur Schaffung der elektrischen Verbindung notwendige Kraft im wesentlichen senkrecht zum Zentralleiter 8 ausgeübt wird.

Der Begriff Kegel umfaßt nicht nur einen Kegel bzw. einen Kegelstumpf im streng geometrischen Sinne, sondern auch solche Formen, durch die eine Preßverbindung zwischen einem ersten und einem zweiten Kontaktstück geschaffen werden kann. Hierbei kann es sich beispielsweise um ein Prisma, vorzugsweise Dreikantprisma oder eine Pyramide handeln.

## Patentansprüche

1. Elektrisch beheizbarer Wabenkörper, vorzugsweise ein Wabenkörper eines katalytischen Konverters, mit einem aus einem Mantel (11) ragenden Zentralleiter (8), der ein erstes Kontaktstück (1, 21) einer Einrichtung umfassend ein zweites (2) Kontaktstück zur Ausbildung einer elektrischen Verbindung bildet, dadurch gekennzeichnet, daß das erste Kontaktstück (1, 21) einen Außenkonus (3) und das zweite Kontaktstück (2) einen Innenkonus (4) aufweist, daß die Mantelfläche des Außenkonuses (3) und die Mantelfläche des Innenkonuses (4) unter einem solchen Neigungswinkel in Abhängigkeit von einer Werkstoffpaarung und/oder einem Oberflächenzustand des ersten und des zweiten Kontaktstückes (1, 21, 2) ausgebildet sind, daß das erste Kontaktstück (1, 21) und das zweite Kontaktstück (2) eine selbsthemmende Konusverbindung bilden.

2. Wabenkörper nach Anspruch 1, dadurch gekennzeichnet, daß das erste Kontaktstück (1, 21) in Nähe des Außenkonuses (3) einen Gewindeabschnitt (5, 13, 16, 23) aufweist, der zur Ausbildung der Konusverbindung mit einem Element (6, 14, 17, 22) verschraubbar ist.

3. Wabenkörper nach Anspruch 2, dadurch gekennzeichnet, daß der Gewindeabschnitt ein Gewindezapfen (5) ist, wobei der Außendurchmesser des Gewindezapfens (5) höchstens dem kleinsten Durchmesser des Innenkonuses (4) entspricht.

4. Wabenkörper nach Anspruch 2, dadurch gekennzeichnet, daß der Gewindeabschnitt eine sich in Richtung des Außenkonuses (3) erstreckende Gewindebohrung (13) ist.

5. Wabenkörper nach Anspruch 2, 3 oder 4, dadurch gekennzeichnet, daß das Element (6, 14, 22) ein Montageelement ist.

6. Wabenkörper nach Anspruch 2, 3 oder 4, dadurch gekennzeichnet, daß das Element (6, 14, 17, 22) ein Befestigungselement ist.

7. Wabenkörper nach Anspruch 3 und 6, dadurch gekennzeichnet, daß das Befestigungselement eine Mutter (6, 22) ist.

8. Wabenkörper nach Anspruch 4 und 6, dadurch gekennzeichnet, daß das Befestigungselement eine Schraube (14) ist.

9. Wabenkörper nach Anspruch 2, dadurch gekennzeichnet, daß der Gewindeabschnitt ein Außengewinde (16) ist, wobei der Außendurchmesser des Außengewindes (16) wenigstens dem größten Durchmesser des Außenkonuses (23) entspricht, wobei das Element (17) eine das zweite Kontaktstück (2) wenigstens teilweise aufnehmende Ausnehmung (18) und wenigstens einen im wesentlichen quer zur axialen Richtung des zweiten Kontaktstückes (2) verlaufenden, vorzugsweise umlaufenden, Anschlag (20) aufweist, der am zweiten Kontaktstück (2) angreift.

10. Wabenkörper nach Anspruch 1, gekennzeichnet durch
ein erstes Kontaktstück, das eine geschlitzte Buchse (21) mit einem Außenkonus (3) umfaßt,
ein zweites einen Innenkonus (4) aufweisendes Kontaktstück (2) und durch ein auf die Buchse (21) aufschraubbares Element (22), durch das das zweite Kontaktstück (2) auf den Außenkonus (3) gepreßt wird.

11. Wabenkörper nach einem der Ansprüche 1 bis 10, dadurch gekennzeichnet, daß eins der Kontaktstücke (1, 21; 2), vorzugsweise das erste Kontaktstück (1, 21), wenigstens teilweise durch einen aus einem Mantel (11) eines elektrisch beheizbaren Wabenkörpers, vorzugsweise eines katalytischen Konverters, ragenden Zentralleiter (8) gebildet ist.

12. Wabenkörper nach einem der Ansprüche 1 bis 11, dadurch gekennzeichnet, daß der Neigungswinkel der Mantelflächen zwischen 1° und 5° liegt, vorzugsweise 1,75° beträgt.

13. Wabenkörper nach einem der Ansprüche 1 bis 12, dadurch gekennzeichnet, daß der Außenkonus (3) die Form eines Außenkegels und der Innnekonus (4) die Form eines Innenkegels hat.

14. Verfahren zur Ausbildung einer elektrischen Verbindung eines elektrisch beheizbaren Wabenkörpers. vorzugsweise eines Wabenkörper eines katalytischen Konverters nach einem der Ansprüche 1 bis 13, mit einer Einrichtung, dadurch gekennzeichnet, daß auf einem Abschnitt eines Außenkonuses (3) eines ersten Kontaktstückes (1, 21) ein zweites Kontaktstück (2) mit einem Innenkonus (4) angeordnet und ein Element (6, 14, 17, 22) mit einem Gewindeabschnitt (5, 13, 16, 23), der in der Nähe des Außenkonuses (3) des ersten Kontaktstükes (1, 21) ausgebildet ist, so verschraubt wird, daß das zweite Kontaktstück (2) auf das erste Kontaktstück (1, 21) zur Ausbildung einer selbsthemmenden Konusverbindung zwischen dem ersten und dem zweiten Kontakstück 1, 21; 2) geschoben und gegebenenfalls danach das Element (6, 14, 17, 22) entfernt wird.

## Claims

1. An electrically heatable honeycomb body, preferably a honeycomb body of a catalytic converter, comprising a central conductor (8) which projects from a casing (11) and which forms a first contact portion (1, 21) of an arrangement including a second (2) contact portion for making an electrical connection, characterised in that the first contact portion (1, 21) has a male taper (3) and the second contact portion (2) has a female taper (4), that the peripheral surface of the male taper (3) and the peripheral surface of the female taper (4) are at such an angle of inclination in dependence on a material pairing and/or a surface condition of the first and second contact portions (1, 21, 2) that the first contact portion (1, 21) and the second contact portion (2) form a self-locking taper connection.

2. A honeycomb body according to claim 1 characterised in that the first contact portion (1, 21) in the proximity of the male taper (3) has a screwthreaded portion (5, 13, 16, 23) which can be screwed to an element (6, 14, 17, 22) to make the taper connection.

3. A honeycomb body according to claim 2 characterised in that the screwthreaded portion is a screwthreaded projection (5), wherein the outside diameter of the screwthreaded projection (5) corresponds at most to the smallest diameter of the female taper (4).

4. A honeycomb body according to claim 2 characterised in that the screwthreaded portion is a screwthreaded bore (13) extending in the direction of the male taper (3).

5. A honeycomb body according to claim 2, claim 3 or claim 4 characterised in that the element (6, 14, 22) is an assembly element.

6. A honeycomb body according to claim 2, claim 3 or claim 4 characterised in that the element (6, 14, 17, 22) is a fixing element.

7. A honeycomb body according to claim 3 and claim 6 characterised in that the fixing element is a nut (6, 22).

8. A honeycomb body according to claim 4 and claim 6 characterised in that the fixing element is a screw (14).

9. A honeycomb body according to claim 2 characterised in that the screwthreaded portion is a male screwthread (16), wherein the outside diameter of the male screwthread (16) corresponds at least to the largest diameter of the male taper (23), wherein the element (17) has an opening (18) at least partially receiving the second contact portion (2) and at least one preferably peripherally extending abutment (20) which extends substantially transversely with respect to the axial direction of the second contact portion (2) and which engages the second contact portion (2).

10. A honeycomb body according to claim 1 characterised by
a first contact portion which includes a slotted sleeve (21) with a male taper (3),
a second contact portion (2) having a female taper (4), and
an element (22) which can be screwed on to the sleeve (21) and by which the second contact portion (2) is pressed on to the male taper (3).

11. A honeycomb body according to one of claims 1 to 10 characterised in that one of the contact portions (1, 21; 2), preferably the second contact portion (1, 21), is formed at least in part by a central conductor (8) which projects out of a casing (11) of an electrically heatable honeycomb body, preferably a catalytic converter.

12. A honeycomb body according to one of claims 1 to 11 characterised in that the angle of inclination of the peripheral surfaces is between 1° and 5°, preferably 1.75°.

13. A honeycomb body according to one of claims 1 to 12 characterised in that the male taper (3) is in the form of an outside cone and the female taper (4) is in the form of an inside cone.

14. A method of making an electrical connection of an electrically heatable honeycomb body, preferably a honeycomb body of a catalytic converter, according to one of claims 1 to 13, with an arrangement, characterised in that arranged on a portion of a male taper (3) of a first contact portion (1, 21) is a second contact portion (2) with a female taper (4) and an element (6, 14, 17, 22) is so screwed to a screwthreaded portion (5, 13, 16, 23) which is provided in the proximity of the male taper (3) of the first contact portion (1, 21) that the second contact portion (2) is pushed on to the first contact portion (1, 21) to make a self-locking taper connection between the first and second contact portions (1, 21; 2) and possibly thereafter the element (6, 14, 17, 22) is removed.

## Revendications

1. Corps en nid d'abeilles pouvant être chauffé électriquement, de préférence corps en nid d'abeilles d'un convertisseur catalytique, comportant un conducteur central (8), qui fait saillie hors d'une enveloppe (11) et qui forme une première pièce de contact (1,21) d'un dispositif comprenant une seconde pièce de contact (2) pour l'établissement d'une liaison électrique, caractérisé en ce que la première pièce de contact (1,21) possède un cône extérieur (3) et la seconde pièce de contact (2) possède un cône intérieur (4), que la surface enveloppe du cône extérieur (3) et la surface enveloppe du cône intérieur (4) sont formées avec un angle d'inclinaison tel, en fonction d'un accouplement de matériaux et/ou d'un état de surface des première et seconde pièces de contact (1,21,22), que la première pièce de contact (1,21) et la seconde pièce de contact (2) forment une liaison autobloquante à cônes.

2. Corps en nid d'abeilles selon la revendication 1, caractérisé en ce que la première pièce de contact (1,21) possède, à proximité du cône extérieur (3), une partie filetée (5,13,16,23), qui peut être vissée avec un élément (6,14,17,22) pour établir la liaison à cônes.

3. Corps en nid d'abeilles selon la revendication 2, caractérisé en ce que la partie filetée est un téton fileté (5), le diamètre extérieur du téton fileté (5) correspondant au maximum au diamètre le plus petit du cône intérieur (4).

4. Corps en nid d'abeilles selon la revendication 2, caractérisé en ce que la partie filetée est un perçage taraudé (13) qui s'étend en direction du cône extérieur (3).

5. Corps en nid d'abeilles selon la revendication 2,3 ou 4, caractérisé en ce que l'élément (6,14,22) est un élément de montage.

6. Corps en nid d'abeilles selon la revendication 2,3 ou 4, caractérisé en ce que l'élément (6,14,17,22) est un élément de fixation.

7. Corps en nid d'abeilles selon les revendications 3 et 6, caractérisé en ce que l'élément de fixation est un écrou (6,22).

8. Corps en nid d'abeilles selon la revendication 4 et 6, caractérisé en ce que l'élément de fixation est une vis (14).

9. Corps en nid d'abeilles selon la revendication 2, caractérisé en ce que la partie filetée est un filetage extérieur (16), le diamètre extérieur du filetage extérieur correspondant au moins au diamètre maximum du cône extérieur (23), tandis que l'élément (17) possède un évidement (18), qui loge au moins partiellement la seconde pièce de contact (2), et au moins une butée (20), de préférence circonférentielle, qui s'étend essentiellement transversalement par rapport à la direction axiale de la seconde pièce de contact (2) et qui engrène la seconde pièce de contact (2).

10. Corps en nid d'abeilles selon la revendication 1, caractérisé par
une première pièce de contact, qui comprend une douille fendue (21) possédant un cône extérieur (3),
une seconde pièce de contact (2) possédant un cône intérieur (4), et un élément (22) qui peut être vissé sur la douille (21) et au moyen duquel la seconde pièce de contact (2) est serrée sur le cône extérieur (3).

11. Corps en nid d'abeilles selon l'une des revendications 1 à 10, caractérisé en ce que l'une des pièces de contact (1,21;2), de préférence la première pièce de contact (1,21), est formée au moins en partie par un conducteur central (8) qui fait saillie hors d'une enveloppe (11) d'un corps en nid d'abeilles pouvant être chauffé électriquement, de préférence d'un convertisseur catalytique.

12. Corps en nid d'abeilles selon l'une des revendications 1 à 11, caractérisé en ce que l'angle d'inclinaison des surfaces enveloppes est compris entre 1° et 5° et est égal de préférence à 1,75°.

13. Corps en nid d'abeilles selon l'une des revendications 1 à 12, caractérisé en ce que le cône extérieur (3) possède la forme d'un cône extérieur et que le cône intérieur (4) possède la forme d'un cône intérieur.

14. Procédé pour établir une liaison électrique d'un corps en nid d'abeilles pouvant être chauffé électriquement, notamment d'un corps en nid d'abeilles d'un convertisseur catalytique selon l'une des revendications 1 à 3, avec un dispositif, caractérisé en ce qu'une seconde pièce de contact (2) possédant un cône intérieur (4) est disposée sur une partie d'un cône extérieur (3) d'une première pièce de contact (1,21), et qu'on visse sur cette pièce de contact un élément (6,14,17,22), et ce sur une partie filetée (5,13,16,23), qui est formée à proximité du cône extérieur (3) de la première pièce de contact (1,21) de telle sorte que la seconde pièce de contact (2) est repoussée sur la première pièce de contact (1,21) pour l'établissement d'une liaison autobloquante par cônes entre les première et seconde pièces de contact (1,21;2), et qu'on retire éventuellement ensuite l'élément (6,14,17,22).
